# EUROPEAN PATENT APPLICATION

(11) **EP 2 501 117 A1**
(43) Date of publication of application: **19.09.2012**
(21) Application number: 11171059.6
(22) Date of filing: 22.06.2011
(51) Int. Cl.: H04M 3/42, H04M 3/493

(54) **A communications system and method**

(30) Priority: 15.03.2011 US 65143
(71) Applicant: Mitel Networks Corporation, Ottawa, ON K2K 2W7 (CA)
(72) Inventor: Szpilfogel, Christian, Ottawa, Ontario K1S 3N5 (CA)
(74) Representative: Venner Shipley LLP

(57) **Abstract**

Described are a system and method of presenting electronic information from an interactive response system to a user communications device. The interactive response system determines a trusted communication service for exchanging the electronic information with the user communications device. First electronic information is presented in a first communication mode from the interactive response system to the user communications device. Second electronic information is presented in at least one second communication mode to the user communications device by the trusted communication service.

## Description

The present specification relates generally to a communications system and method and particularly, although not exclusively, to automated response systems, and specifically to systems and methods for conducting multimodal interactive communications.

An interactive voice response (IVR) system is well-known for automating interactions with a telephone user. During a typical operation, an IVR system receives a call from a telephone caller, and provides the caller with a pre-recorded or computer-generated voice message that offers the caller a set of menu options to choose from. The caller can select an IVR menu option of interest by pressing a telephone key on the caller's telephone corresponding to the menu option of interest, or orally identifying the menu option by speaking into the telephone. The IVR system detects the voice or telephone key inputs and provides the requested information to the caller in another pre-recorded message, computer-generated voice message, or other type of communication known to those of ordinary skill in the art, for example, a facsimile. Thus, an IVR system is often used by businesses to provide bank balances, flight schedules, movie show times, or other information to their customers, with little or no human interaction required from an operator or customer service representative.

For example, a bank can configure an IVR system to instruct a caller via a prerecorded voice message to "press '1' for account balances," or to "press '2' to speak with a customer service representative." In this example, the caller can press the "1" key on the caller's touch-tone telephone keypad or virtual keyboard, which outputs a dual-tone multi-frequency (DTMF) response corresponding to the selected option to the IVR system. Alternatively, the IVR system can include a speech recognition feature, permitting the caller to enunciate the option when selecting a menu option, for example, speaking into the phone and orally selecting the number "1". In response, the IVR system can retrieve the requested account balance information from a database in communication with the IVR system, convert the account balance information to speech, and present the results in the form of a prerecorded or computer-generated voice response to the caller. Here, the caller is limited to interacting with the IVR system in a single mode of interaction, i.e., voice only. Thus, the caller must retain the information provided by the IVR system when making a selection or when receiving information resulting from the selection, which can limit the effectiveness of the IVR system when interacting with the caller.

Features and advantages of the invention will be apparent from the detailed description which follows, taken in conjunction with the accompanying drawings, which together illustrate, by way of example, features of the invention; and, wherein:
FIG. 1 is a schematic network diagram illustrating a communications environment in which embodiments of the present inventive concepts can be employed;
FIG. 2 is an illustration of parallel transmission paths between an interactive communications system and a user communications device of FIG. 1, in accordance with an embodiment;
FIG. 3 is a block diagram of an interactive communications system, in accordance with an embodiment;
FIG. 4 is a flowchart of a method for presenting information from an interactive communications system to a user communications device, in accordance with an embodiment;
FIG. 5 is a schematic network diagram illustrating information flow paths between an interactive communications system and a smartphone, in accordance with an embodiment;
FIG. 6 is a screenshot of a display on the smartphone shown in FIG. 5 in which menu options provided by the interactive communications system are illustrated, in accordance with an embodiment; and
FIG. 7 is another screenshot of a display on the smartphone shown in FIG. 5, in accordance with an embodiment.

Before embodiments of the present invention are disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

A storage device can include a computer readable storage medium, which may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

In brief overview, systems and methods are disclosed for establishing a multimodal interaction with a communications device, also referred to as a user communications device or an electronic communications device, for example, a smartphone. In a preferred embodiment, the systems and methods provide for the exchange of information between an automated response system and a user communications device in accordance with at least two different communication modes, for example, voice via an audio output and text, graphical images, or other visual information via a graphical user interface (GUI) on the user communications device. Other communication modes can include, for example, tactile or audible communication modes.

Conventional automated response systems such as IVR systems are configured to interact with a plain old telephone system (POTS) telephone or a cellular phone in a voice-only mode of communication. The systems and methods of the embodiments described herein introduce alternative or additional modes of communication between an automated response system and a user communications device. In this manner, multi-modal interactions can occur between the automated response system and the user communications device. For example, IVR-related information such as menu options can be delivered in both a voice communication mode to the user communications device and in a visual communication mode to the user communications device.

In an embodiment, the systems and methods comprise an interactive communications system that is an element of an automated response system. In another embodiment, the systems and methods comprise an interactive communications system that is separate from but in communication with an automated response system. For example, the interactive communications system can supplement an IVR system by receiving data, signals, and the like to and from the IVR system and providing features not offered by the IVR system. The systems and methods can be configured to output information, for example, IVR menu options, to a smartphone or other user communications device as prerecorded messages, computer-generated voice prompts, or other outputs known to those of ordinary skill in the art. The interactive communications system also outputs the same or similar information or supplemental information to the user communications device in a visual communication mode, for example, in the form of text, graphical images, video, or other forms of data. The interactive communications system can provide information to the user communications device in a voice communication mode via a first transmission path established between the interactive communications system and the user communications device, and provides the same or similar information or supplemental information to the communications device in a visual communication mode via a second transmission path, which is initiated from the interactive communications system.

Smartphones and other communications devices are often located in a different communications network domain than an IVR system. For example, an IVR system is often hosted by a service provider or a business located on a private network. A smartphone on the other hand is typically located in a public domain or another private domain, referred to as an "untrusted" network environment. Here, an IVR system can interact in a voice mode of communication with the smartphone. However, it is well-known that a "trusted" network environment from the perspective of the smartphone is required for the smartphone to receive text, graphical images, or other modes of communication, since a smartphone is generally configured to prevent receipt of unsolicited data from unknown sources when the smartphone is in an untrusted network environment.

For example, proprietary smartphone applications are available, for example, Visual Voicemail by Apple Computer, Inc., that permit a smartphone user to visually scroll through a list of voicemail messages in lieu of listening to the voicemail messages in sequential order. In doing so, the smartphone can initiate a trust relationship by periodically polling for voicemail messages. Other smartphones, for example, Blackberry® smartphones, can be connected to a trusted network environment, whereby a trust relationship is established such that the smartphone securely and reliably receives images, text or audio content "pushed" to the smartphone from a content provider.

In another example, a trust relationship can be formed between an enterprise voicemail server and a business telephone in a private network, whereby the voicemail server can be configured to provide voicemail options in a voice mode, e.g., prerecorded speech, to a user on the business phone while also displaying the options in text to a display on the business phone. As in the previous example, the business phone is limited to operation in a private domain, and, absent the availability of a virtual private network (VPN) or similar configuration, cannot support such features if configured to operate in a different network than the private network to which the voicemail server is connected.

Accordingly, without a trusted network environment, a conventional automated response system in a private domain cannot interact with a smartphone in a public domain by "pushing" non-voice mode information, for example, IVR options in the form of text or graphics, to a smartphone display. Smartphones are typically configured to "pull" information from a remote location such as a server. An example of a pull mechanism is a conventional email application, which polls a mail server for new email messages. If new email messages are present, then the email application "pulls" the new email messages to the smartphone. However, this feature is not feasible for communicating with an IVR system in a multi-modal manner, since the time differential between the delivery of voice mode IVR information to the smartphone and visual mode information delivered via email or similar pull mechanisms can be prohibitively great. Also, the smartphone user is required to initiate an interactive communication with an IVR system to receive data in this manner.

Another approach is to configure a smartphone with a proprietary application that enables the smartphone to initiate a multimodal session with a particular IVR system. However, this requires a one-on-one relationship between a proprietary application on the smartphone and the particular IVR system, which limits the scope of use of the application. For example, the smartphone cannot engage in a multimodal interaction with a different IVR system. Further, the smartphone user is required to execute the application for initiating communication with the IVR system. Improper activation of the application can result in the smartphone rejecting an incoming communication from the IVR system as unsolicited information.

In other non-trusted network environments, a text message can be transmitted to a smartphone to confirm a user selection of an IVR menu option. However, the text message is provided after the selection is made, and does not assist the user in the menu selection process, nor can the text message be used to complement or enhance the corresponding voice-generated IVR menu options provided to the user.

In other non-trusted network environments, a different mode of communication may be used instead of voice to deliver information from an IVR system to a smartphone. For example, a user may receive IVR menu options in the form of a text message. Here, the user must respond in a like manner, for example, in the form of a text message. Thus, the user is limited to communicating with the IVR in accordance with one mode of communication.

The systems and methods in accordance with embodiments of the present inventive concepts permit a user communications device such as a smartphone to communicate with a communications platform in accordance with two or more different modes of communication, regardless of whether or not the interactive communications system and the user communications device are in different network domains. One of the modes of communication can be a voice communication mode. In establishing other modes of communication, the interactive communications system determines whether the user communications device can receive information in accordance with the other modes in accordance with a trusted relationship requirement set forth by the user communications device. For example, the interactive communications system can determine whether certain communications services such as a short message service (SMS), a multimedia messaging service (MMS), or push email, are supported by the user communications device and deemed as "trust mechanisms" by the user communications device so that non-voice modes of communication can be established between the interactive communications system and the user communications device. These trust mechanisms can be used to deliver information in a visual communication mode, for example, text, graphics, video, and the like. Accordingly, the interactive communications system can provide information such as IVR menu options or other supplemental information in the form of SMS text messages or MMS graphical images to the user communications device as well as in the form of voice prompts. This feature can facilitate a user to choose the proper menu option, which would otherwise be difficult if the options were presented in a voice-only mode of communication. In other words, the user can view the menu options as well as hear them. The user can also provide responses to the interactive communications system by selecting an icon provided as an IVR menu option instead of selecting a telephone key, or by sending an email message or an SMS message to the interactive communications system.

In an embodiment, when the user communications device receives an incoming message from the interactive communications system, an application on the user communications device, for example, a commercially available off-the-shelf application such as the Peek-a-who email notification tool, is activated, or other application considered to be sufficiently trusted. Since the application is activated via a well-known trusted service such as SMS, there is no requirement by the user to initiate an interaction with the interactive communications system for establishing a multimodal interaction. In other applications, when the user communications device receives an incoming message from the interactive communications system, the user can view, hear, or otherwise receive the contents of the incoming message with no need to activate such applications.

In other embodiments, the user communications device is configured with a proprietary application, for example, an IVR application configured to communicate with a single corresponding IVR. Here, the interactive communications system triggers the application to establish a multimodal interaction between the user communications device and an automated response system or other communications platform rather than requiring the user to initiate an interaction as with conventional approaches.

In the abovementioned embodiments, the interactive communications system can deliver information in a voice communication mode to the user communications device independently, and asynchronously, with respect to the delivery of textual, graphical, video, or multimedia information.

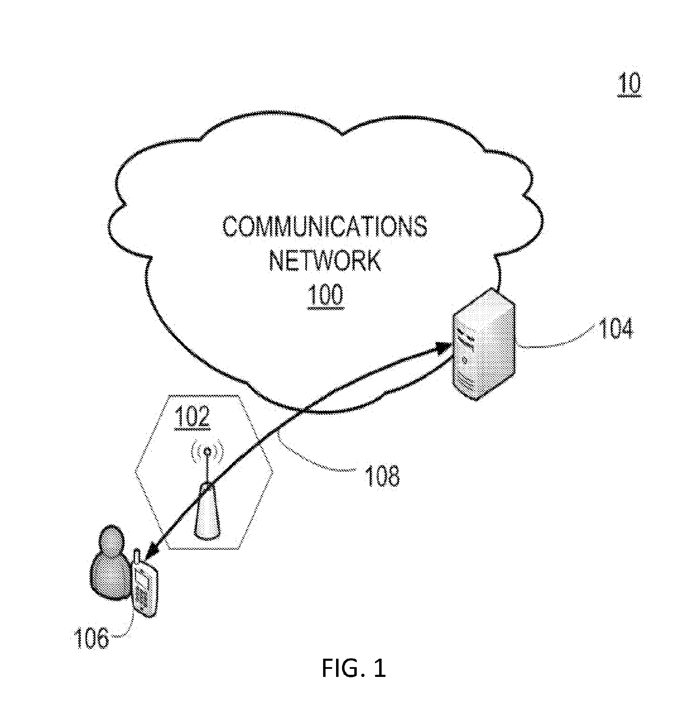

FIG. 1 is a schematic network diagram illustrating a communications environment 10 in which embodiments of the present inventive concepts can be employed. The communications environment 10 includes a communications network 100. The communications network 100 can be configured to facilitate communications between a user communications device 106 and an interactive communications system 104. The communications network 100 can include a local area network (LAN), a wide area network (WAN), a public switched telephone network (PSTN), a Wi-Fi network, a private network, or other any combination of wireless and wired networks known to those of ordinary skill in the art for transmitting voice, data, video, and/or other media types used in communications. It should be appreciated that the communications network 100 and the cellular network 102 are shown by way of example and are not intended to limit this disclosure.

The user communications device 106 can be a consumer electronic device such as a telephone, mobile phone such as a smartphone, personal digital assistant (PDA) or other handheld computer, personal computer, and the like, or other electronic device configured to receive and/or output voice, data, video, and/or other media types. In a preferred embodiment, the user communications device 106 is configured to interact according to two or more modes of communication. The user communications device 106 can include a touch-sensitive display, buttons, an audio input, a speaker, or other inputs and outputs known to those of ordinary skill in the art for entering data or receiving data in accordance with one or more communication modes, for example, text, graphical images, video, and the like.

In an embodiment, the interactive communications system 104 is configured to communicate with a communications platform, which can include an IVR system or other automated response system, a voicemail system, a predictive dialing system, an automated interactive outbound call system, a private branch exchange (PBX), an auto attendant, a voice portal, an application server, a telephony customer relationship management (CRM) system, and the like, or a combination thereof. In another embodiment, the interactive communications system 104 is included in the communications platform, for example, co-located with an IVR system in the same computer server.

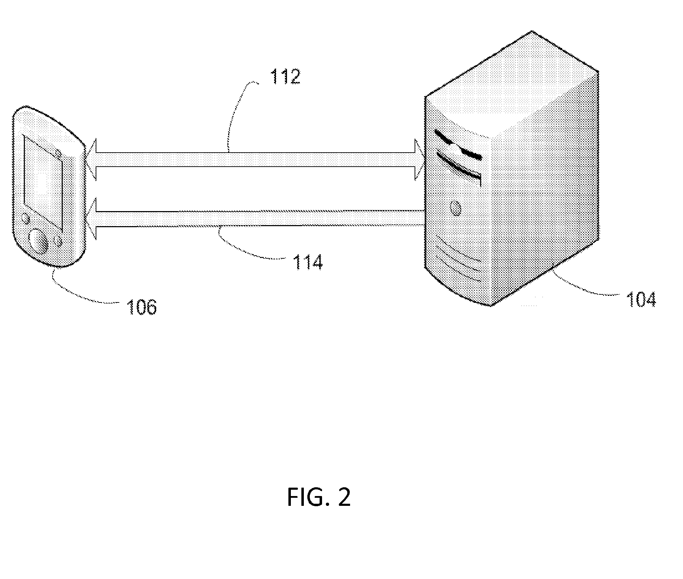

As shown in FIG. 2, a first transmission path 112 and a second transmission path 114 can be formed between the interactive communications system 104 and the user communications device 106. The first transmission path 112 and/or the second transmission path 114 can include a unidirectional communication path or a bidirectional communication path between the interactive communications system 104 and the user communications device 106. The first transmission path 112 and the second transmission path 114 can deliver information asynchronously with respect to each other. The first transmission path 112 and/or the second transmission path 114 are established for the exchange of data and/or voice traffic according to control protocols, routing protocols, and other electronic information delivery services known to those of ordinary skill in the art.

The interactive communications system 104 can be configured to deliver information in a voice communication mode over one of the first and second transmission paths 112, 114 to the user communications device 106, and deliver data such as text messages, graphical images, multimedia, and the like in a visual communication mode over the other of the first and second transmission paths 112, 114. The information can be substantially the same information, for example, IVR menu options, provided according to multi-modal communication. Alternatively, the information can be different in each of the modes of communication. For example, the information transmitted over the first transmission path 112 in a voice communication mode an include IVR menu options, and the information transmitted over the second transmission path 114 in a text or multimedia message can be related to the voice-generated information, and include supplemental information, for example, graphical images descriptive of the IVR menu options. Thus, the user can listen to the presented IVR menu options as well as view the menu options or view data related to the menu options. The user can then select a displayed menu option by pressing a key on a telephone keypad corresponding to the displayed menu option of interest to the user. Alternatively, the user can select a menu option via a different mode, for example, a text message to the interactive communications system 104. The user communications device 106 can receive the information in different modes of communication at substantially the same time, or at different times.

The user communications device 106 can be configured to include an application, for example, an IVR client application, that conducts multimodal communications. The interactive communications system 104 can activate this application on the user communications device 106, whereby SMS or other communication service can deliver information to the user communications device 106 in accordance with the modes of communication supported by the application. The application, for example, the abovementioned Peek-a-who application, can include a user interface that presents the received information in a visual format to a display on the user communications device 106. The user interface can permit the user to respond to the received information, for example, to select an IVR menu option by sending a text message to the interactive communications system 104. The interactive communications system 104 can present information to the application in a mode of communication compliant with the application, for example, in the form of a text message. In response, a popup window is displayed on the user communications device 106 showing the contents of the message.

In order for an application on the user communications device 106 to present the information sent from the interactive communications system 104, delimiters can be included that separate items of information, for example, individual options in a list of IVR menu options, or include XML style tagging and the like, permitting user-defined or custom features to be exchanged between the user communications device 106 and the interactive communications system 104.

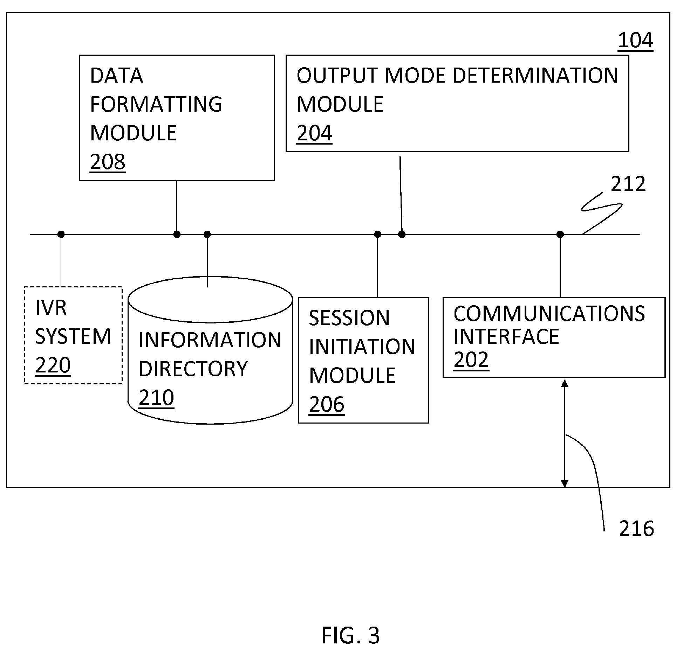

FIG. 3 is a block diagram of an embodiment of the interactive communications system 104 shown in FIGs. 1 and 2. In this embodiment, the interactive communications system 104 includes a communications interface 202, an output mode determination module 204, a session initiation module 206, a data formatting module 208, and an information directory 210. The interactive communications system 104 can include hardware, software, firmware, or a combination thereof. The interactive communications system 104 can execute entirely on a computer, for example, a server, or some elements of the interactive communications system 104, for example, the session initiation module 206, can execute on a computer, while other elements, for example, the data formatting module 208, can execute on a remote computer. The communications interface 202, output mode determination module 204, session initiation module 206, data formatting module 208, and information directory 210 can communicate with each other via a computer bus 212 and/or other connectors known to those of ordinary skill in the art.

In an embodiment, the interactive communications system 104 includes an IVR system module 220 that is coupled to the computer bus 212 for communicating with one or more other elements of the interactive communications system 104. The IVR system module 220 can also communicate via the communications interface 202 with an apparatus that is external to the interactive communications system 104, for example, the user communications device 106 or an external information source such as an application server. In other embodiments, the interactive communications system 104 includes other telephony systems, for example, automatic response systems, predictive dialers, and the like, which are positioned with the interactive communications system 104 under a same computer hardware platform. In other embodiments, the interactive communications system 104 communicates via the communications interface 202 with a communications platform, for example, an IVR server external to and physically separate from the interactive communications system 104.

The communications interface 202 can be connected to the communications network 100 via one or more connectors 216 known to those of ordinary skill in the art, for example, LAN, WAN, broadband, and the like. The communications interface 202 is configured to receive signals, e.g., control signals and/or communications protocol signals for least those modes of communication described herein, permitting the interactive communications system 104 to communicate with external devices, such as the user communications device 106, an external communications platform, and/or one or more intermediary communications devices, for example, a network router in the communications network 100. The communications interface 202 can establish one or more transmission paths can be established from the communications interface 202 to the user communications device 106, for example, transmission paths 112, 114 described with regard to FIG. 2, for receiving and processing email messages, text messages, or other forms of response to and from the user communications device 106. The communications interface 202 can be configured for DTMF detection, speech recognition, and/or related features.

The output mode determination module 204 determines at least one mode of communication supported by the user communications device and/or communications services such as short message service (SMS), multimedia messaging service (MMS), or push email for delivering a mode of communication to the user communications device. A communication service can be referred to as a trust mechanism or a trusted communication service. Thus, the smartphone accepts delivery of modes of communication provided via the communication service. The user communications device 106 can be configured with applications that perform such services, for example, the abovementioned Peek-a-who email notification application. The use of such services, e.g., SMS, MMS, push email, and the like, permit a trusted relationship to be established between the interactive communications system 104 and the user communications device 106 such that information in the form of text, graphical images, etc. can be delivered to, and accepted by, the user communications device 106.

The output mode determination module 204 can determine the identity of the user communications device 106 when a connection is established. This is achieved by the output mode determination module 204 processing information related to the called number or the calling number of the user communications device 106, for example, a Dialed Number Identification Service (DNIS) and/or an Automatic Number Identification (ANI), or other call control information provided by the communications network 100. The called number or the calling number can be used as an identifier, for example, to identify a trusted mode of communication such as SMS. Other identification information can be transmitted to the interactive communications system 104 for determining one or more modes of communication.

The output mode determination module 204 can query a public directory, customer database, or other information source such as data repositories, internet websites, social networking sites, etc. to determine one or more services, e.g., SMS, MMS, push email, etc. which are supported by the user communications device 106, and used as trust mechanisms to deliver information to the user communications device 106 in text, images, or other visual mode of communication. The modes of communication can be derived from the called number or calling number of the user communications device 106, from supplemental information provided during call setup between the user communications device 106 and the interactive communications system 104, or from an information source query.

In an embodiment, the interactive communications system 104 includes an XML engine (not shown) that defines the manner in which the interactive communications system 104 processes data, for example, menu options to be presented to the user. The XML engine can be integrated with an IVR, for example, under XML logic, or alternatively, the XML engine can be separate from an IVR. The interactive communications system 104 can alternatively process such data, for example, menu options, according to proprietary scripts or other data processing and presentation approaches known to those of ordinary skill in the art.

The XML engine can include an XML script or a VoiceXML script that identifies the communications services, e.g., SMS, MMS, and the like that are supported by the user communications device 106, for example, as determined by the output mode determination module 204. Accordingly, IVR menu options defined by the XML engine can be provided to the user communications device 106 in accordance with a mode of communication identified in the script. For example, if the user selects an IVR menu option that requires a graphical image of the selected option to be sent to the user communications device 106, then the IVR can determine from the XML script whether the user communications device 106 supports MMS, permitting the graphical image to be presented on the display of the user communications device.

The session initiation module 206 establishes a data connection with the user communications device 106 according to the communication services determined by the output mode determination module 204. For example, when SMS is determined to be a viable communication service for the delivery of text information, the session initiation module 206 establishes an SMS communications session between the interactive communication server 104 and the user communications device 106, whereby text information can be presented to the user communications device 106.

The session initiation module 206 can activate an application on the user communications device 106 for establishing a multimodal session with the interactive communications system 104 or with a communications platform external to the interactive communications system 104.

The session initiation module 206 can activate a commercially available application such as the abovementioned Peek-a-who application, which presents a pop-up window on the user communications device 106 in response to a message or other signal received from the session initiation module 206. Optionally, the session initiation module 206 can activate proprietary applications, such as an IVR user interface configured for presenting IVR menu options to the user. In activating an application, the session initiation module 206 can initiate a multimodal session with the user communication device 106.

The data formatting module 208 provides the information to be delivered to the user communications device 106 according to a mode of communication determined to be supported by the user communications device 106. The information can be the same or similar information provided to the user communications device 106 in the voice communication mode, for example, IVR menu options, except that the information is presented in a different mode, for example, in the form of text or images. Alternatively, the information can supplement the information provided in the voice communication mode, for example, graphical icons corresponding to IVR menu options presented in a voice mode.

The data formatting module 208 can receive the information to be presented from a database such as the information directory 210, or from a remote source of information. Examples include voicemail messages, audio recordings, speech conversion results, or other information known to those of ordinary skill in the art as being part of an interactive response system. The data formatting module 208 can alternatively receive the information from the same source of information as that used to provide IVR options in the voice communication mode. For example, the data formatting module 208 can request XML information from an application server via an HTTP request. The information sent to the user communications device 106, for example, IVR menu options, can rely on delimiters, XML-style tagging, or other delivery features sent for example by an IVR. The user communications device 106 can display the information as a text message or MMS message on the user communications device 106 in accordance with the corresponding XML format.

The IVR system module 220 can process user response information received via the communications interface 202. The IVR system module 220 includes features known to those of ordinary skill in the art as being offered by an automated response system. For example, when a user selects an IVR menu option by pressing a key on the user communications device 106, the IVR system 220 can process the request and determine an appropriate response.

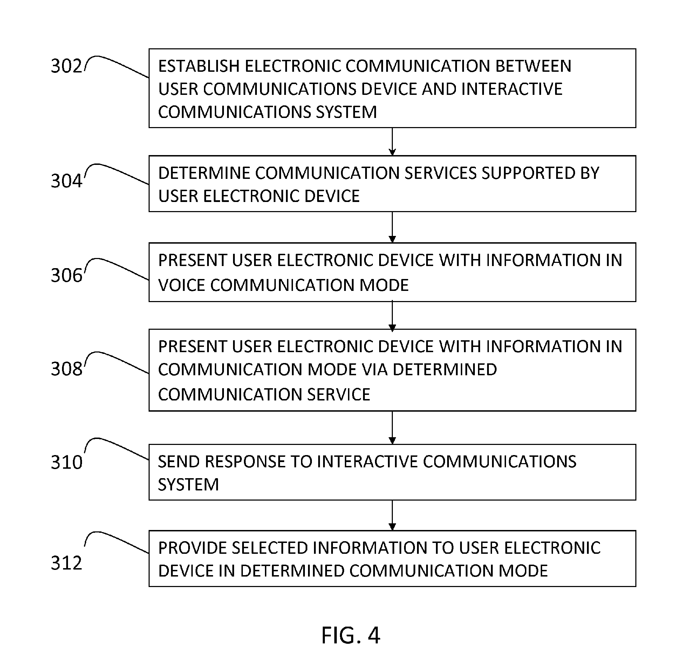

FIG. 4 is a flowchart of an embodiment of a method for presenting information from an interactive communications system to a user communications device in communication with the interactive communications system. Some or all of the method can be implemented in the interactive communications system 104 and/or the user communications device 106 described in FIGs. 1-3. Accordingly, in describing the method, reference is also made to FIGs. 1-3.

The method commences with an electronic communication being established 302 between the user communications device 106 and the interactive communications system 104. In an embodiment, a caller places a call from the user communications device 106 to the interactive communications system 104. The call can be a phone call, text message, instant message, videoconferencing session, or other communication. In another embodiment, the interactive communications system 104 initiates a call to the user communications device 106. Optionally, a third-party communications platform in communication with the interactive communications system 104, for example, a predictive dialing server, can initiate a call to the user communications device 106.

One or more transmission paths can be formed between the user communications device 106 and the interactive communications system 104. In an embodiment, the one or more transmission paths include a multimodal transmission path, permitting multimodal communications to be provided between the interactive communications system 104 and the user communications device 106. For example, information such as IVR menu options can be presented to the user communications device 106 via the transmission paths in a voice communication mode and/or a visual communication mode, for example, a text messaging mode or a multimedia messaging mode.

One or more communication services are determined 304 to be supported by the user communications device 106 for delivery of information in other modes of communication such as text, multimedia, video, and the like. The communication services can include trusted communication services, such as SMS, MMS, push email, and the like.

The communication services, for example, SMS, and/or visual modes of communication, for example, text, can be determined from a DNIS, ANI, or other user identification provided from the user communications device 106 via the call signaling protocol when a transmission path is established between the interactive communications system 104 and the user communications device 106. For example, information such as the phone number of the user communications device 106 can be identified as being associated with a legacy handset, or being associated with a smartphone capable of receiving and displaying images, text, and the like. Communication services and/or visual modes of communication can also be determined by supplemental information provided with the call or a database lookup based on the user identification as described herein.

The user communications device 106 is presented 306 with information in a voice communication mode. For example, the user communications device 106 can receive greetings, IVR menu options, or other information in the form of voice prompts.

The user communications device 106 is also presented 308 with information in a visual communication mode via the determined communication service. For example, IVR menu options can be presented to the user communications device 106 in an SMS message identified among the modes/services supported by the user communications device 106.

A user at the user communications device 106 can send 310 to the interactive communications system 104 a response to the information provided in one or both of the voice and visual communication modes. The response can be sent as a touch tone, for example, by pressing a key on the user communications device 106. Alternatively, the user can respond by speaking into the telephone. For example, the user can select by voice an option in response to an IVR voice prompt providing a set of menu options to the user. Alternatively, the response can be sent in a text message, email message, or another mode of communication. Thus, the interactive communications system 104 can be configured to receive tones, text, voice, or other modes of communication. The user communications device 106 can send a response in the same mode of communication or a different mode of communication as the mode of communication used by the interactive communications system 104 to send information.

In response to the user selection, information corresponding to the selection can be provided 312 to the user communications device 106 in a communication mode, for example, text, supported by the communication service, for example, SMS, used to transmit the information. For example, if the user selects an IVR menu option that includes multimedia, then the interactive communications system 104 can send the selected information via MMS assuming that MMS is a determined communication service. After this information is sent, the interactive communications system 104 can transmit additional information, for example, more options, or next steps according to approaches known to those of ordinary skill in the art, for example, an XML script or a proprietary, user-defined script.

The interactive communications system 104 can optionally present a push email message, for example, as used by a Blackberry® smartphone, or present an SMS message and the like to the user communications device 106, alerting an application on the user communications device 106, for example, the abovementioned Peek-a-who application, that the user has initiated a communication, for example, a phone call, with the interactive communications system 104, and that the interactive communications system 104 is compatible with a communication service supported by the application. Here, a trust relationship is formed between the user communications device 106 and the interactive communications system 104, permitting a multi-modal session to be performed the interactive communications system 104. Alternatively, where the user communications device 106 includes a proprietary application for communicating in a multimodal manner with a particular IVR or other communications platform, the interactive communications system 104 can activate the proprietary application, whereby a multimodal session with the IVR system or communications platform is established.

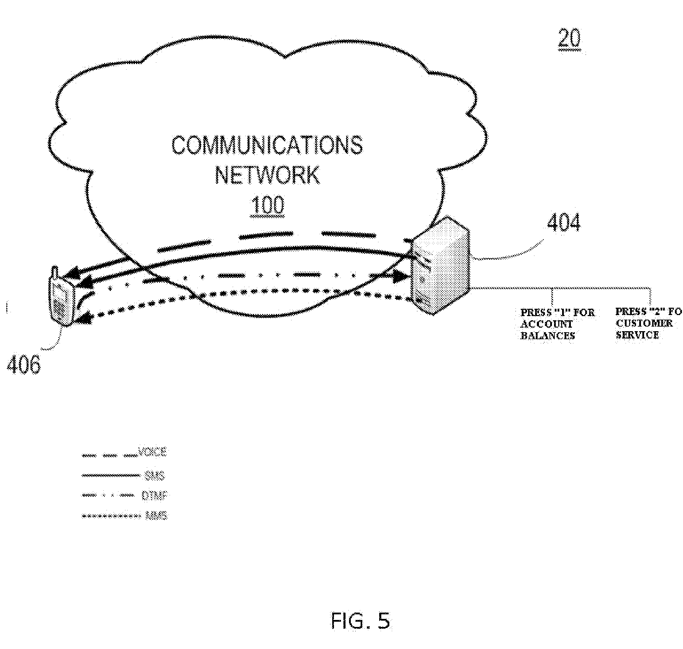

FIG. 5 is a schematic network diagram illustrating a communications environment 20 through which information flow paths are established between an interactive communications system 404 and a smartphone 406, in accordance with an embodiment.

In this illustrative example, one or more transmission paths are formed between the interactive communications system 404 and the smartphone 406 in accordance with embodiments herein through which the information flow paths can be established. The interactive communications system 404 submits electronic information in a voice communication mode to the smartphone 406 over one of the transmission paths. For example, a voice prompt can present to the user a list of options, such as "press '1' for account balances" or "press '2' for customer service."

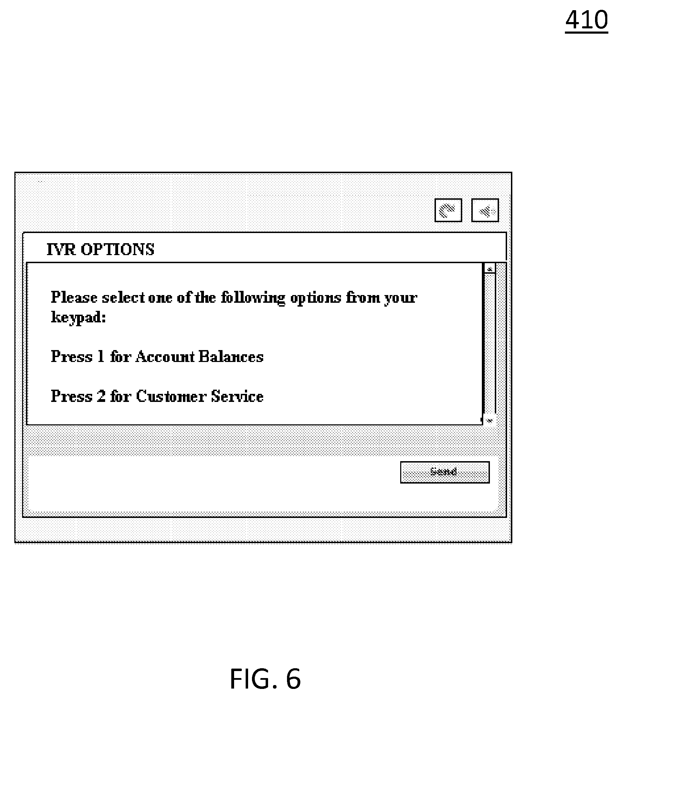

The interactive communications system 404 can also provide the user with electronic information via an SMS text message over a transmission path, as shown by the solid arrow identified as "SMS." The interactive communications system 404 first determines whether the smartphone 406 supports SMS text communications. A list of options provided in the voice communication mode, or other related information, can also be provided to the user as contents of an SMS text message. The user can see the options in a text messaging inbox on the smartphone 406, or, as shown in FIG. 6, as a popup via a client 410 such as Peek-a-who, or other commercially available or proprietary application in communication with the interactive communications system 404.

In response, the user can select from the smartphone 406 one of the options identified in the list of options. The option can be selected by submitting a tone, for example, a DTMF signal, by pressing a key on a keypad on the smartphone 406 to the interactive response system 404, or directly to an automated response system in communication with the interactive response system 404.

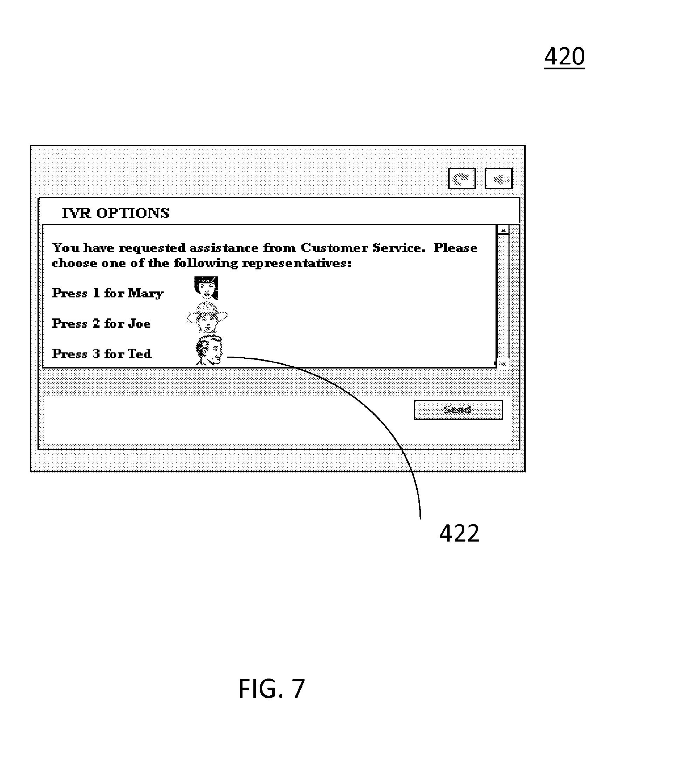

In the illustrative example shown in FIGs. 5 and 7, the user can select an option that has multimedia options, for example, graphical images 422. Thus, regardless that the user receives the list of options in one mode, i.e., SMS text, a different communication service can be established such as MMS for delivering the graphical images 422.

While the invention has been shown and described with reference to specific embodiments, it should be understood by those skilled in the art that various changes in form and detail may be made therein without departing from the scope of the invention as recited in the accompanying claims.

## Claims

1. A method for presenting electronic information from an interactive response system to a user communications device, comprising:
determining by the interactive response system a trusted communication service for exchanging the electronic information with the user communications device;
presenting first electronic information of the electronic information in a first communication mode from the interactive response system to the user communications device; and
presenting second electronic information of the electronic information in a second communication mode to the user communications device by the trusted communication service.

2. The method of claim 1 further comprising:
establishing a first communication session between the interactive response system and the user communications device for presenting the first electronic information to the user communications device in the first communication mode; and
initiating from the interactive response system a second communication session to the user communications device for presenting by the trusted communication service the second electronic information to the user communications device in the second communication mode.

3. The method of claim 2, wherein the first and second communication sessions are established for an asynchronous delivery of the first and second electronic information, respectively.

4. The method of any of claims 1 to 3, wherein the interactive response system includes an interactive voice response (IVR) system.

5. The method of any preceding claim 1, wherein determining the trusted communication service includes determining that the user communications device is configured to receive the second electronic information from at least one of a short message service (SMS), a multimedia messaging service (MMS), and a push email service.

6. The method of any preceding claim further comprising sending, in response to at least one of the presented first electronic information and the presented second electronic information, a communication to the interactive response system and optionally wherein the communication is sent to the interactive response system by a different trusted communication service than the trusted communication service delivering the second electronic information.

7. The method of any preceding claim, wherein the first communication mode is a voice communication mode and wherein the second communication mode is a different communication mode than the voice communication mode and optionally wherein the second communication mode includes at least one of a visual communication mode, a tactile communication mode, or an audible communication mode.

8. The method of any preceding claim further comprising:
activating by the interactive response system an application configured for a multimodal communication; and
outputting from the application at least one of the first and second electronic information in at least one of the first and the second communication mode and optionally wherein activating the application by the interactive response system comprises:
receiving by the application at least one of the second electronic information and an activation command in the communication mode from the interactive response system; and
outputting via the application information related to the at least one of the second electronic information and an activation command.

9. The method of claim 8 further comprising:
configuring the application for a proprietary communication with the interactive response system;
receiving by the application activation information from the interactive response system, the activation information output from the interactive response system in the second communication mode; and
establishing from the user communications device the proprietary communication with the interactive response system in response to receiving the activation information in the second communication mode from the interactive response system.

10. A method as claimed in any of claims 1 to 9, wherein:
the electronic information is multimodal information; and
the user communications device is a smartphone;

11. The method of any of claims 1 to 10, further comprising:
configuring the user communications device to include an application that communicates with the interactive response system in compliance with the trusted communication service;
activating the application by the interactive response system; and
presenting by the application the electronic information in the second communication mode to a display on the user communications device.

12. An communications system, comprising:
an output mode determination module that determines a trusted communication service from which a user communications device can communicate with the interactive communications system;
a session initiation module that initiates at least one transmission path to the user communications device; and
a data formatting module that generates electronic information for delivery to the user communications device over the transmission path via the determined trusted communication service.

13. The communications system of claim 12, wherein the session initiation module initiates a multi-modal transmission path to the user communications device.

14. The communications system of claim 12 or claim 13, wherein the data formatting module presents first electronic information in a first communication mode to the user communications device over the multi-modal transmission path and presents second electronic information in a second communication mode over the multi-modal transmission path by the trusted communication service.

15. The communications system of any of claims 12 to 14, wherein the trusted communication service includes at least one of a short message service (SMS), a multimedia messaging service (MMS), and a push email service.
